# EUROPEAN PATENT APPLICATION

(11) **EP 0 953 416 A2**
(43) Date of publication of application: **03.11.1999**
(21) Application number: 99106214.2
(22) Date of filing: 12.04.1999
(51) Int. Cl.: B28D 5/00, B28D 5/04

(54) **Wire saw and method for slicing workpiece by use of the same**

(30) Priority: 30.04.1998 JP 13607598
(71) Applicant: SHIN-ETSU CHEMICAL CO., LTD., Chiyoda-ku Tokyo (JP)
(72) Inventor: Yamada, Toru, 2-13-1 Isobe, Annaka-shi, Gunma-ken (JP); Tokunaga, Katsushi, 2-13-1 Isobe, Annaka-shi, Gunma-ken (JP)
(74) Representative: Wibbelmann, Jobst, Dr., Dipl.-Chem.

(57) **Abstract**

A wire saw equipped with a mechanism for reciprocating a workpiece in a direction parallel to a wire. A wire saw which includes a workpiece-rocking mechanism for rocking a workpiece in a plane including the traveling direction of a wire and a mechanism for synchronizing the motion of the workpiece-rocking mechanism and the vertical motion of the workpiece. A method for slicing a workpiece by use of a wire saw, which method includes the step of slicing the workpiece while reciprocating the workpiece in a direction parallel to a wire. A method for slicing a workpiece by use of a wire saw, which method includes the steps of rocking a workpiece in a plane including the traveling direction of a wire and synchronizing the rock of the workpiece and the travel of the wire.

## Description

### BACKGROUND OF THE INVENTION

### Field of the Invention:

The present invention relates to a wire saw for slicing fragile material, such as silicon, crystalline material, glass, or ceramics, as well as to a method for slicing a workpiece by use of the wire saw.

### Description of the Related Art:

Conventionally, a wire saw is used to slice an object to be sliced (workpiece) into flat plates of uniform thickness. Examples of such a workpiece include a quartz ingot, a semiconductor silicon ingot, and GaP, InP, etc. In such a wire saw, a fine wire of steel such as piano wire travels in a single direction or reciprocates while a workpiece is pressed against the traveling wire and abrasive grains are supplied to a contact portion between the wire and the workpiece, thereby slicing the workpiece.

The wire saw has the following advantages: it can use a wire of a small diameter as compared to the thickness of a diamond blade used in a slicing machine or that of band steel used in a band saw so that expensive material can be sliced with a smaller cutting allowance; and it can slice various kinds of workpieces to a very high degree of accuracy. The wire saw can slice, for example, a quartz ingot, a semiconductor silicon ingot, or a compound semiconductor ingot of GaP or InP, at high productivity.

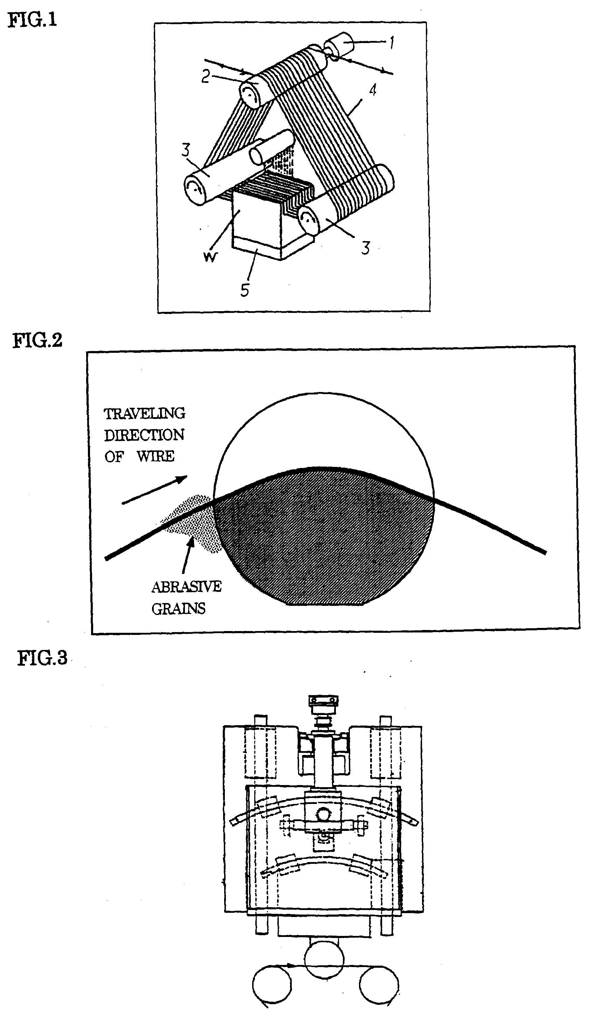

FIG. 1 exemplifies the cutting mechanism of the wire saw. The wire saw includes a drive motor 1, a roller 2 connected to the motor 1, two or three rollers 3 disposed in parallel to the roller 2 and not connected to the motor 1, and a wire 4 extending between and wound spirally around the rollers 3. A workpiece W is brought into contact with the wire 4 traveling through the rotation of the motor 1 while liquid which contains dispersed abrasive grains is sprayed over the workpiece W and the wire 4, and the workpiece W is thereby sliced. In FIG. 1, the workpiece W is pressed, by a vertically moving mechanism 5, against rows of the wire 4 from underneath, but the vertically moving mechanism 5 may be disposed such that the workpiece W is pressed against the wire 4 from above.

FIG. 2 illustrates the state of slicing a workpiece by use of a wire and abrasive grains. Abrasive grains caught between the wire and the workpiece grind the surface of the workpiece to thereby effect slicing. As the wire travels, abrasive grains are ejected from between the wire and the workpiece. Thus, liquid which contains dispersed abrasive grains is continuously sprayed over the wire before the wire enters the workpiece, and thereby becomes caught between the wire and the workpiece. However, since the wire and the workpiece are brought into close contact with each other under slicing pressure, the efficiency in supplying new abrasive grains is poor, so that the cutting rate cannot be increased.

According to a conventionally proposed method for improving the efficiency in supplying abrasive grains, rows of wire are rocked to partially separate the wire from the workpiece to thereby improve the supply efficiency. However, this method is not practical, since the method requires a complex mechanism for rotating and rocking rollers, as well as a complex mechanism for absorbing variations in wire length which arise between the wire release side and the wire take-up side due to the rotational rock.

Another method for improving the efficiency in supplying abrasive grains as shown in FIG. 3 is disclosed in Japanese Patent Application Laid-Open (*kokai*) No. 9-85736. According to this method, a workpiece is rocked This method has an advantage over the above-described method in that the mechanism for absorbing variations in wire length is either unnecessary or of relatively simple structure. However, members for supporting a workpiece must be configured to travel on circular arc guide rails. Since the members are subjected to torsion and a bending moment, difficulty in supporting the workpiece to a high degree of accuracy and rigidity is involved, resulting in deterioration in slicing accuracy and durability.

### SUMMARY OF THE INVENTION

The present invention has been accomplished to solve the above-described problems, and an object of the invention is to provide a wire saw having a high cutting rate achieved by increasing the amount of abrasive grains caught between a wire and a workpiece through improvement in the wire saw's structure and slicing system, as well as to provide a method for slicing a workpiece by use of the wire saw.

To achieve the above object, the present invention provides a wire saw comprising means for reciprocating a workpiece in a direction parallel to a wire.

Through the employment of the reciprocating means, the amount of abrasive grains caught between the wire and the workpiece increases as compared to that in the case of a conventional wire saw. As a result, the cutting rate increases.

Preferably, the wire saw further comprises means for synchronizing the reciprocating motion of the workpiece and the travel of the wire.

Through employment of the means for synchronizing the reciprocating motion of the workpiece and the travel of the wire, abrasive grains can be more efficiently caught between the wire and the work.

Preferably, the wire saw further comprises means for synchronizing the reciprocating motion of the workpiece and the vertical motion of the workpiece.

Through employment of the means for synchronizing the reciprocating motion of the workpiece and the vertical motion of the workpiece, the workpiece contacts the wire under an ideal pressure at all times during slicing, in accordance with the progress of the slicing of the workpiece. Thus, slicing can be carried out more efficiently.

The present invention further provides a wire saw comprising: a workpiece-rocking mechanism for rocking a workpiece in a plane including the traveling direction of a wire; and means for synchronizing the motion of the workpiece-rocking mechanism and the travel of the wire.

Through employment of the workpiece-rocking mechanism and the means for synchronizing the motion of the workpiece-rocking mechanism and the travel of the wire, not only can the workpiece be rocked, but also the rock of the workpiece and the travel of the wire can be synchronized, in contrast to the case of a conventional wire saw which only rocks a workpiece. Accordingly, the amount of abrasive grains caught between the wire and the workpiece increases significantly as compared to the case of the conventional wire saw, thereby increasing the cutting rate significantly.

The present invention still further provides a wire saw comprising: a workpiece-rocking mechanism for rocking a workpiece in a plane including the traveling direction of a wire; and means for synchronizing the motion of the workpiece-rocking mechanism and the vertical motion of the workpiece.

Through employment of the workpiece-rocking mechanism and the means for synchronizing the motion of the workpiece-rocking mechanism and the vertical motion of the workpiece, not only can the workpiece be rocked, but also the rock of the workpiece and the vertical motion of the workpiece can be synchronized, in contrast to the case of a conventional wire saw which only rocks a workpiece. Accordingly, the vertical motion of the workpiece which accompanies the rock of the workpiece can be canceled. As a result, not only does the supply of abrasive grains increase, but also the workpiece contacts the wire under an ideal pressure at all times during slicing, in accordance with the progress of the slicing of the workpiece. Thus, slicing can be carried out more efficiently.

The present invention still further provides a wire saw comprising: a workpiece-rocking mechanism for rocking a workpiece in a plane including the traveling direction of a wire; and means for synchronizing the motion of the workpiece-rocking mechanism, the travel of the wire, and the vertical motion of the workpiece.

Through employment of the workpiece-rocking mechanism and the means for synchronizing the motion of the workpiece-rocking mechanism, the travel of the wire, and the vertical motion of the workpiece, not only can the workpiece be rocked, but also the rock of the workpiece, the travel of the wire, and the vertical motion of the workpiece can be synchronized, in contrast to the case of a conventional wire saw which only rocks a workpiece. Accordingly, the amount of abrasive grains caught between the wire and the workpiece can be increased significantly as compared to the case of the conventional wire saw, and the workpiece contacts the wire under an ideal pressure at all times during slicing, in accordance with the progress of the slicing of the workpiece, thereby carrying out slicing more efficiently. Thus, the cutting rate becomes significantly high.

Preferably, the workpiece-rocking mechanism may comprise a workpiece table for holding the workpiece and a link mechanism for supporting the workpiece table. Further preferably, the workpiece-rocking mechanism may comprise a workpiece table for holding a workpiece and a plurality of expansion arms for supporting the worktable. Still further preferably, the workpiece-rocking mechanism may comprise a workpiece table, one side of which is rotatably attached to a support member and the opposite side of which is connected to the support member via an expansion arm.

These workpiece-rocking mechanisms are of simple, robust structure and can be made to have significantly high degrees of accuracy and rigidity for supporting a workpiece. Thus, in contrast to the case of a conventional wire saw which rocks a workpiece, the wire saw of the invention has high slicing accuracy and excellent durability.

The present invention still further provides a method for slicing a workpiece by use of a wire saw, comprising the step of slicing the workpiece while reciprocating the workpiece in a direction parallel to a wire.

By slicing the workpiece while reciprocating the workpiece in a direction parallel to the wire, abrasive grains are efficiently caught between the wire and the workpiece, so that the cutting rate of the workpiece can be improved.

Preferably, the workpiece is sliced while the reciprocating motion of the workpiece and the travel of the wire are synchronized.

By slicing the workpiece while synchronizing the reciprocating motion of the workpiece and the travel of the wire, abrasive grains can be efficiently caught between the wire and workpiece, and the cutting rate of the workpiece can be improved.

Preferably, the workpiece is sliced while the reciprocating motion of the workpiece and the vertical motion of the workpiece are synchronized.

By slicing the workpiece while synchronizing the reciprocating motion of the workpiece and the vertical motion of the workpiece, the workpiece contacts the wire under an ideal pressure at all times during slicing, in accordance with the progress of the slicing of the workpiece. Thus, slicing can be carried out more efficiently.

The present invention still further provides a method for slicing a workpiece by use of a wire saw, comprising the steps of: rocking a workpiece in a plane including the traveling direction of a wire; and synchronizing the rock of the workpiece and the travel of the wire.

By slicing the workpiece while rocking the workpiece in the plane including the traveling direction of the wire and synchronizing the rock of the workpiece and the travel of the wire, the amount of abrasive grains caught between the wire and the workpiece increases significantly in contrast to the case of a conventional wire saw which only rocks a workpiece, thereby increasing the cutting rate of the workpiece significantly.

The present invention still further provides a method for slicing a workpiece by use of a wire saw, comprising the steps of: rocking a workpiece in a plane including the traveling direction of a wire; and synchronizing the rock of the workpiece and the vertical motion of the workpiece.

By slicing the workpiece while rocking the workpiece in the plane including the traveling direction of the wire and synchronizing the rock of the workpiece and the vertical motion of the workpiece, the vertical motion of the workpiece which accompanies the rock of the workpiece can be canceled, in contrast to the case of a conventional wire saw which only rocks a workpiece. As a result, not only does the supply of abrasive grains increase, but also the workpiece contacts the wire under an ideal pressure at all times during slicing, in accordance with the progress of the slicing of the workpiece. Thus, slicing can be carried out more efficiently.

The present invention still further provides a method for slicing a workpiece by use of a wire saw, comprising the steps of: rocking a workpiece in a plane including the traveling direction of a wire; and synchronizing the rock of the workpiece, the travel of the wire, and the vertical motion of the workpiece.

By slicing the workpiece while rocking the workpiece in the plane including the traveling direction of the wire and synchronizing the rock of the workpiece, the travel of the wire, and the vertical motion of the workpiece, the amount of abrasive grains caught between the wire and the workpiece can be increased significantly as compared to the case of the conventional wire saw, and the workpiece contacts the wire under an ideal pressure at all times during slicing, in accordance with the progress of the slicing of the workpiece, thereby carrying out slicing more efficiently. Thus, the workpiece can be sliced at a significantly high cutting rate.

The present invention will be further described in detail, but the description should not be construed as limiting the invention.

The present inventors conducted studies in order to improve the cutting rate of a wire saw by improving the efficiency at which abrasive grains are caught between a wire and a workpiece.

According to a conventionally known technique for improving the efficiency in supplying abrasive grains, the state of close contact between a wire and a workpiece is altered. Examples of such a technique include rock of rows of a wire and rock of a workpiece (Japanese Patent Application Laid-Open (*kokai*) No. 9-85736). However, as mentioned previously, the method in which rows of the wire are rocked has a drawback in that a mechanism for rocking rows of the wire has a complex structure, and is thus not practical. By contrast, the method in which the workpiece is rocked has an advantage over the method in which rows of the wire are rocked, in that a mechanism for rocking the workpiece has a relatively simple structure, but has a drawback in that the structural rigidity of the mechanism is rather poor, thus failing to provide a practical level of slicing accuracy and durability. Also, the improvement of the cutting rate achieved by these methods is not satisfactory.

As mentioned above, the method in which the workpiece is rocked enables the mechanism for rocking the workpiece to have a relatively simple structure.

Thus, the present inventors decided to employ the method in which the workpiece is rocked, and improved the method and an apparatus for carrying out the method, thereby realizing a practical wire saw having a high cutting rate.

### BRIEF DESCRIPTION OF THE DRAWINGS

FIG. 1 is a perspective view showing an example of the slicing mechanism of a conventional wire saw;
FIG. 2 is a view showing the state of slicing a workpiece by means of a wire and abrasive grains;
FIG. 3 is a view showing the structure of the wire saw of Japanese Patent Application Laid-Open (*kokai*) No. 9-85736;
FIG. 4 is a view showing the state of slicing the workpiece while the workpiece is being reciprocated;
FIG. 5 is a view showing the state of slicing the workpiece while the workpiece is being reciprocated;
FIG. 6 is a diagram showing the state of synchronizing the reciprocating motion of the workpiece and the travel of the wire;
FIG. 7 is a diagram showing the state of synchronizing the reciprocating motion of the workpiece and the vertical motion of the workpiece;
FIG. 8 is a view showing an example apparatus for reciprocating the workpiece;
FIG. 9 is a view showing the state of slicing the workpiece while the workpiece is being rocked;
FIG. 10 is a view showing the state of slicing the workpiece while the workpiece is being rocked;
FIG. 11 is a diagram showing the state of synchronizing the rock of the workpiece and the travel of the wire;
FIG. 12 is a diagram showing the state of synchronizing the rock of the workpiece and the vertical motion of the workpiece;
FIG. 13 is a view showing an example of a workpiece-rocking mechanism equipped with a link mechanism;
FIG. 14 is a view showing a state how the workpiece-rocking mechanism of FIG. 13 rocks;
FIG. 15 is a view showing another example of the workpiece-rocking mechanism equipped with the link mechanism;
FIG. 16(A) is a view showing an example of the workpiece-rocking mechanism equipped with a plurality of arms as viewed on an XZ plane;
FIG. 16(B) is a view showing an example of the workpiece-rocking mechanism equipped with a plurality of arms as viewed on an YZ plane;
FIG. 17 is a view showing an example of a mechanism for expanding/contracting arms;
FIG. 18 is a view showing an example of a mechanism for expanding/contracting arms;
FIG. 19 is a view showing an example of the workpiece-rocking mechanism in which one side of a workpiece table is rotatably attached to a support member and the opposite side of the workpiece table is connected to the support member via an expansion arm; and
FIG. 20 is a view showing a state how the workpiece-rocking mechanism of FIG. 19 rocks.

### DESCRIPTION OF THE PREFERRED EMBODIMENTS

Embodiments of the present invention will now be described in detail with reference to the drawings.

The present inventors studied the method in which a workpiece is moved to alter the state of contact between a wire and the workpiece in order to improve the cutting rate of the workpiece. As mentioned previously, the mechanism for moving the workpiece is preferably simple and robust.

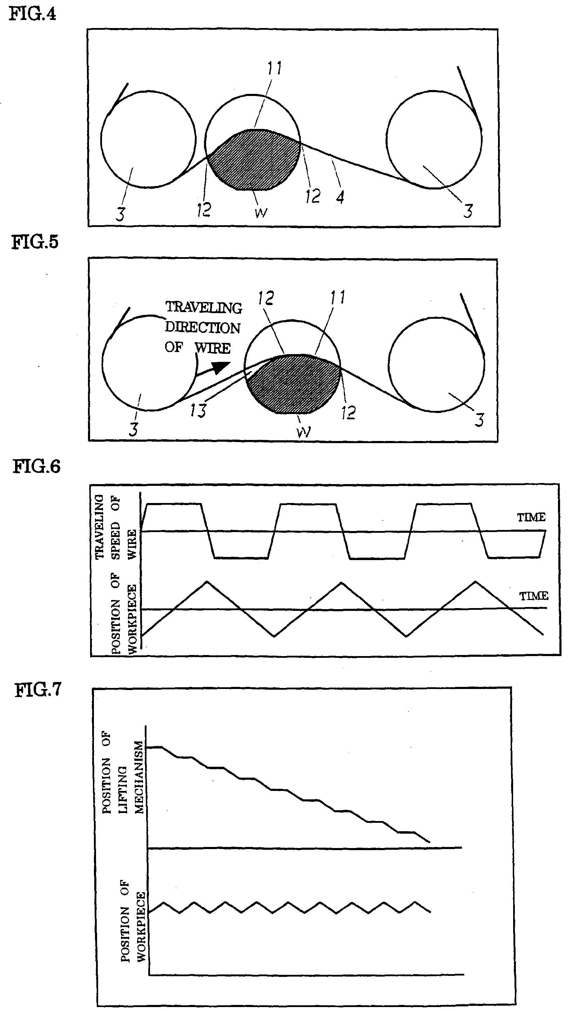

According to one of the methods devised by the inventors, the workpiece is reciprocated in parallel to the traveling direction of the wire. FIGS. 4 and 5 show how the workpiece is sliced efficiently by reciprocating the workpiece in parallel to the traveling direction of the wire.

FIG. 4 shows a state as observed at a certain point of time during slicing a workpiece W by the method. In FIG. 4, the workpiece W is positioned such that it is biased toward a left-hand roller 3, and a wire 4 travels from left to right. At this time, the wire 4 is in contact with the workpiece W at an intermediate portion 11 of the workpiece's cut edge. The intermediate portion 11 of the cut edge has a curvature proportional to the pressure applied by the wire 4. Also, at an end portion 12 of the cut edge, the wire 4 extends along the tangent of the end portion 12. Since the workpiece W is biased toward the left-hand roller 3, cutting on the left-hand side of the workpiece W is more advanced than that on the right-hand side.

At another point of time during the reciprocation of the workpiece W between the right-hand and left-hand rollers 3, when the workpiece W moves to an intermediate position between the rollers 3 as shown in FIG. 5, the wire 4 separates from the left end portion of the cut edge, resulting in the formation of a wedge-shaped gap 13. Since the wire 4 is traveling from left to right, liquid which contains dispersed abrasive grains is sprayed over the gap 13, so that abrasive grains are efficiently caught between the wire 4 and the workpiece W. As a result, a cutting characteristic is significantly improved.

In this case, the above-described beneficial effect is not yielded when the workpiece W moves in a direction opposite the traveling direction of the wire 4. However, in such a case, the workpiece W is moved at a speed higher than in the case where the workpiece W is moved in the same direction as the traveling direction of the wire 4, so that the time during which the workpiece W and the wire 4 move in opposite directions (hereinafter called "retrograde time") is reduced, compared with the time during which the workpiece W and the wire 4 move in the same direction.

As shown in FIG. 6, by making the wire 4 travel from left to right when the workpiece W moves from left to right and by making the wire 4 travel from right to left when the workpiece W moves from right to left, the retrograde time can be completely removed, so that abrasive grains are efficiently caught between the wire 4 and the workpiece W at all times during slicing. In other words, by synchronizing the reciprocating motion of the workpiece W and the travel of the wire 4, the cutting characteristic can be significantly improved over the entire cutting time.

In this case, as shown in FIG. 7, the reciprocating motion of the workpiece W and the vertical motion of the workpiece W are preferably synchronized. This is because, in this slicing method, the cutting rate depends of the position of the workpiece W. This feature is particularly noticeable when the reciprocating motion of the workpiece W and the travel of the wire 4 are synchronized, since the traveling speed of the wire 4 becomes zero at a certain point of time. By synchronizing the reciprocating motion of the workpiece W and the vertical motion of the workpiece W, the workpiece W contacts the wire 4 under an ideal pressure at all times during slicing, in accordance with the progress of the slicing of the workpiece W, thereby carrying out slicing more efficiently.

Various kinds of apparatus are conceivable as means for reciprocating the workpiece W. Since the reciprocating motion is a simple motion, the apparatus can assume a simple, robust, and compact structure.

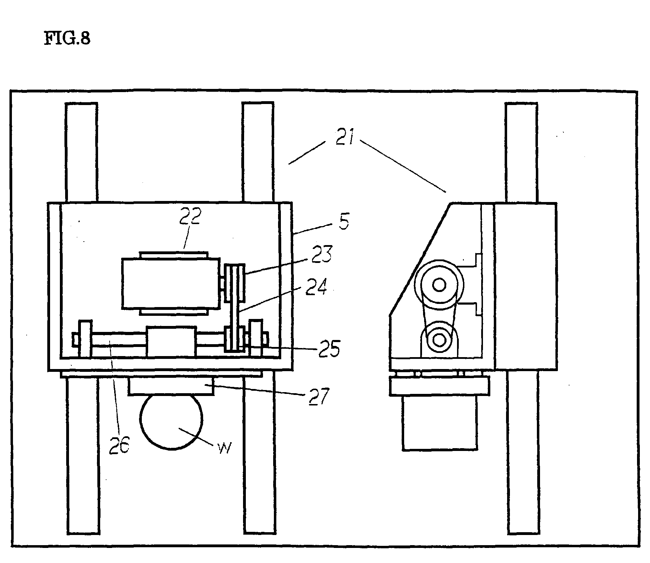

FIG. 8 shows an example of an apparatus for reciprocating the workpiece W. A workpiece-reciprocating mechanism 21 is mounted on a workpiece-vertically-moving mechanism 5. The workpiece-reciprocating mechanism 21 has a motor 22 serving as a motive power for reciprocating a workpiece W. A motor pulley 23 is attached to the shaft of the motor 22.

A ball screw 26 is attached to a workpiece table 27 which holds the workpiece W. When the ball screw 26 rotates, an associated screw mechanism causes the workpiece table 27 to move.

A ball screw pulley 25 is attached to the ball screw 26. The ball screw pulley 25 and the motor pulley 23 are connected by a belt 24 for transmission of power therebetween.

In the above-described apparatus, when the motor 22 is rotated in either direction, the workpiece W held by the workpiece table 27 is reciprocated accordingly. Assuming a simple mechanism, such an apparatus can be designed to become very compact, and thus can be readily attached to an existing wire saw. Further, since the workpiece-reciprocating mechanism 21 is very simple and robust with no use of a circular arc guide rail or a like member, the mechanism 21 does not cause deterioration in slicing accuracy and durability.

Regarding another method devised by the present inventors for improving the cutting rate of a workpiece through the motion of the workpiece, the inventors improved a conventional method in which the workpiece is rocked as well as a conventional mechanism for rocking the workpiece. As mentioned previously, the conventional method in which the workpiece is rocked is not satisfactory in terms of the cutting rate.

According to the method devised by the inventors, the workpiece is rocked while the rock of the workpiece and the travel of the wire are synchronized. FIGS. 9, 10, and 11 illustrate how the workpiece is sliced efficiently by rocking the workpiece while the rock of the workpiece and the travel of the wire are synchronized.

FIG. 9 shows a state as observed at a certain point of time during slicing a workpiece W by the method. In FIG. 9, the workpiece W is rocked counterclockwise. At this time, a wire 4 is in contact with the workpiece W at an intermediate portion 31 of the workpiece's cut edge. The intermediate portion 31 of the cut edge has a curvature proportional to pressure applied by the wire 4. At the left-hand side of the workpiece W, the wire 4 separates from the left end portion of the cut edge, resulting in the formation of a wedge-shaped gap 32.

At this time, as shown in FIG. 11, by synchronizing the rock of the workpiece W and the travel of the wire 4, causing the wire 4 to travel from left to right, and spraying over the gap 32 liquid which contains dispersed abrasive grains, abrasive grains are efficiently caught between the wire 4 and the workpiece W. As a result, a cutting characteristic is significantly improved.

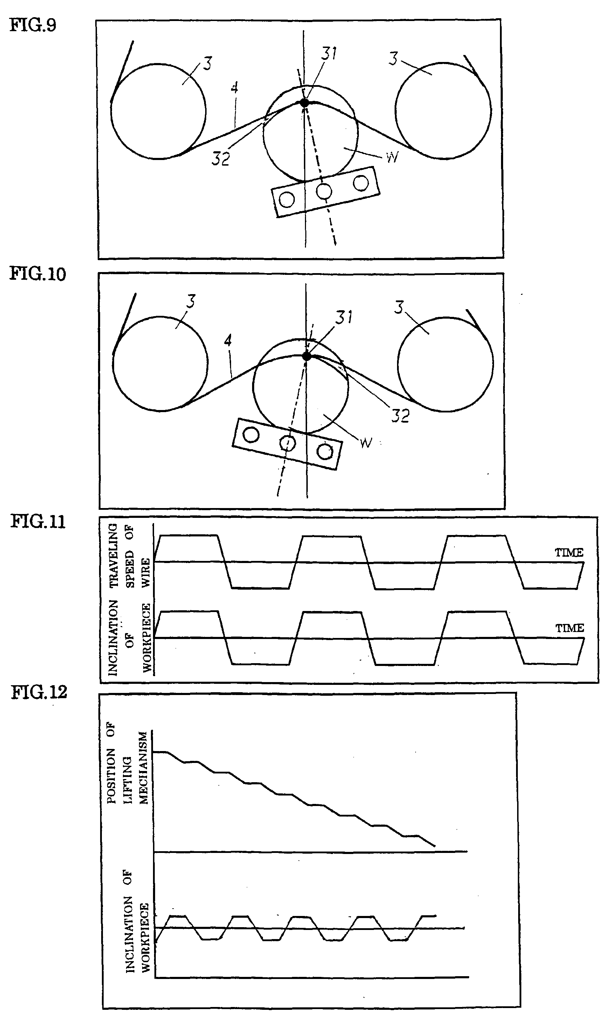

As shown in FIG. 10, when the workpiece is rocked clockwise, the wire 4 is caused to travel from right to left synchronously with the rock of the workpiece W, thereby cutting the workpiece W. Thus, through the synchronization of the rock of the workpiece W and the travel of the wire 4, the cutting speed for the workpiece W is significantly improved in contrast to the case of the conventional slicing method in which a workpiece is merely rocked.

In this case, as shown in FIG. 12, the rock of the workpiece W and the vertical motion of the workpiece W are preferably synchronized. This is because, in this slicing method, the cutting rate depends of the rock position of the workpiece W. Also, the rock of the workpiece W may be accompanied by the vertical motion of the workpiece W; thus, the vertical motion of the workpiece, if any, must be canceled. The variation of the cutting rate dependent on the rock position of the workpiece W is particularly noticeable when the rock of the workpiece W and the travel of the wire 4 are synchronized, since the traveling speed of the wire 4 becomes zero at a certain point of time. Accordingly, when the rock of the workpiece W and the travel of the wire 4 are synchronized, the rock of the workpiece W and the vertical motion of the workpiece W are preferably synchronized.

By synchronizing the rock of the workpiece W and the vertical motion of the workpiece W, the workpiece W contacts the wire 4 under an ideal pressure at all times during slicing, in accordance with the progress of the slicing of the workpiece W, thereby carrying out slicing more efficiently.

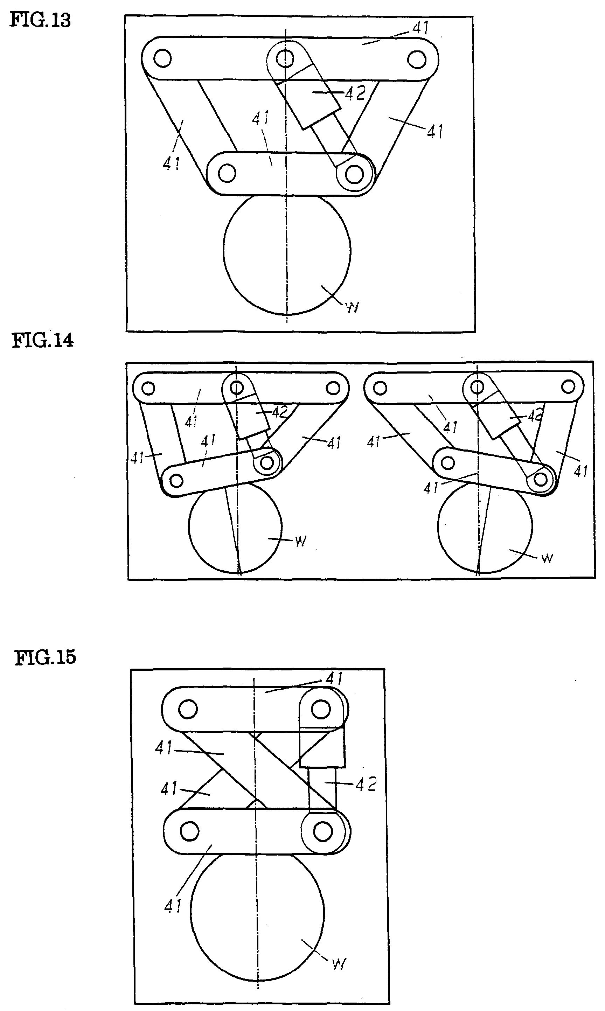

A workpiece-rocking mechanism for rocking a workpiece may include, for example, a workpiece table for holding the workpiece and a link mechanism for supporting the workpiece table. FIG. 13 shows an example of a workpiece-rocking mechanism having such a configuration. Four steel plates 41 are rotatably connected to each other as shown in FIG. 13. The shape of the thus-formed quadrilateral is not uniquely determined. An expansion arm 42 is rotatably connected to two sides of the quadrilateral as shown in FIG. 13. By expanding/contracting the arm 42, the shape of the quadrilateral can be deformed as shown in FIG. 14. The arm 42 may be implemented in the form of a hydraulic cylinder or a like device or in the form of a combination of ball screw and motor.

The shape of the quadrilateral of the link mechanism is not limited to that of FIG. 13. The sides of the quadrilateral may assume any length ratios so as to obtain a desired rock motion. In place of a usual quadrilateral, a quadrilateral having two crossing sides as shown in FIG. 15 may be employed.

The base side of the link mechanism is mounted on a workpiece-vertically-moving mechanism of a wire saw, whereas the head side of the link mechanism supports the workpiece table. In this manner, the mechanism for rocking the workpiece can be added to an existing wire saw without any remodeling of the wire saw. In contrast to the case of the aforementioned circular arc guide rails, the thus-configured workpiece-rocking mechanism can be entirely composed of high-rigidity steel plates or steel pipes or like members, thereby assuming a significantly high mechanical strength.

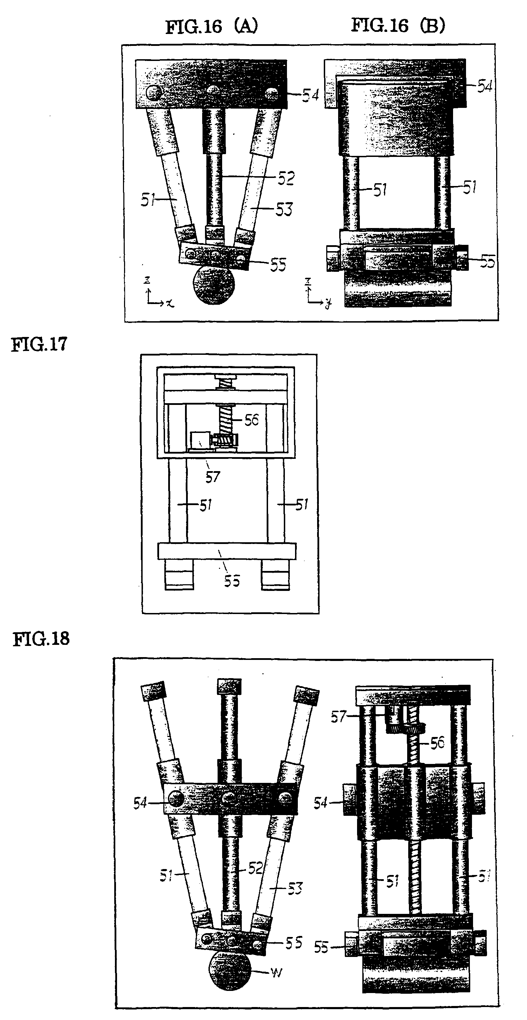

A workpiece-rocking mechanism of another type may include, for example, a workpiece table for holding a workpiece and a plurality of expansion arms for supporting the workpiece table. FIGS. 16(A) and 16(B) exemplify such a workpiece-rocking mechanism. Arms 51, 52, and 53 are rotatably connected to a stationary member 54 and to a workpiece table 55. The arms 51, 52, and 53 can be freely expanded/contracted through the operation of a built-in motor (not shown).

As shown in FIG. 16, through the independent control of these three arms 51, 52, and 53, the posture of the workpiece table 55 can assume two degrees of freedom, i.e., movement, on the XZ plane and one degree of freedom, i.e., rotation, on the XZ plane. Accordingly, such a workpiece-rocking mechanism can freely control not only the rock of the workpiece but also the vertical motion of the workpiece.

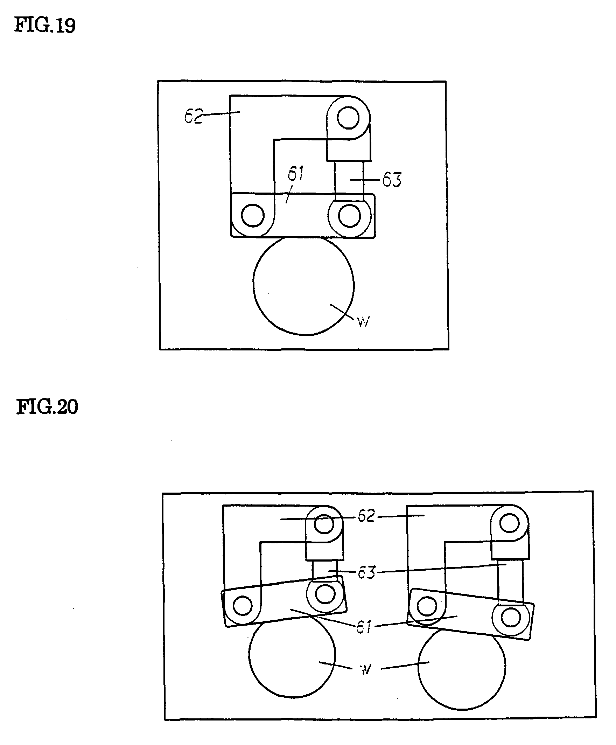

Various kinds of mechanisms for expanding/contracting the arms are conceivable. For example, as shown in FIG. 17, such a mechanism may include a ball screw 56 and a motor 57. In this case, as shown in FIG. 18, a mechanism whose arms are slidable with respect to the stationary member 54 may yield a similar effect.

Since a stationary member for each arm is rotatable, only a tensile force or a compressive force acts on the arms, and no torsion or bending moment acts on the arms. Accordingly, such a workpiece-rocking mechanism exhibits very high rigidity. Also, such a workpiece-rocking mechanism can be readily attached to an existing wire saw.

A workpiece-rocking mechanism of another type may include, for example, a workpiece table for holding a workpiece, one side of which workpiece table is rotatably attached to a support member and an opposite side of which workpiece table is connected to the support member via an expansion arm. FIG. 19 exemplifies such a workpiece-rocking mechanism. As shown in FIG. 19, one side of a rectangular workpiece table 61 is rotatably connected to a support member 62, and the opposite side is connected to the support member 62 via an expansion arm 63. As shown in FIG. 20, by changing the length of the arm 63, the workpiece table 61 can be rocked. The arm 62 may be implemented in the form of a hydraulic cylinder or a like device or in the form of a combination of ball screw and motor.

Since the workpiece is usually held by the workpiece table at the center of the table, the side of the workpiece table connected rotatably to the support member, which serves as the center of rock, is located off a vertical plane which includes the centerline of the workpiece. The thus-configured workpiece-rocking mechanism exhibits a small vertical motion of the workpiece which accompanies the rock of the workpiece, thereby reducing a burden on the wire and that on the workpiece-lifting apparatus.

As described above, the workpiece-rocking mechanism can be made small-sized and robust. Thus, the base portion of the support member of the workpiece-rocking mechanism can be readily attached to the workpiece-vertically-moving mechanism of an existing wire saw.

### EXAMPLES

The present invention will next be described by way of example.

### Example 1 and Comparative Example 1:

A workpiece was sliced by use of a wire saw whose workpiece-lifting apparatus is equipped with the workpiece-reciprocating mechanism of FIG. 8. The workpiece was a monocrystalline silicon block having a diameter of 125 mm and a length of 300 mm. Abrasive grains used were of #1000 silicon carbide. Abrasive grains were dispersed in an amount of 1 kg for 1 liter of oil. The diameter of a wire was 180 µm; rows of the wire were arranged at a pitch of 0.5 mm; the tension of the wire was 2.6 kgf; a wire span was 415 mm; an average traveling speed of the wire was 500 m/min; and the workpiece was pressed against the wire at a force of 100 kgf. The wire was made to travel synchronously with the reciprocating motion of the workpiece. Also, the workpiece was moved vertically synchronously with the reciprocating motion of the workpiece.

In Comparative Example 1, a conventional wire saw was used. A workpiece was fixed at a center portion between rollers and was sliced under the above-described conditions. The results are shown in Table 1.

As seen from Table 1, the cutting rate of the wire saw of Example 1 is improved to almost twice that in the case of the conventional wire saw of Comparative Example 1. No difference was observed in slicing accuracy after 1000 hours operation between Example 1 and Comparative Example 1.

### Example 2 and Comparative Example 2:

A workpiece was sliced by use of a wire saw whose workpiece-lifting apparatus is equipped with the workpiece-rocking mechanism of FIG. 13. The workpiece was a monocrystalline silicon block having a diameter of 125 mm and a length of 300 mm. Abrasive grains used were of #1000 silicon carbide. Abrasive grains were dispersed in an amount of 1 kg for 1 liter of oil. The diameter of a wire was 180 µm; rows of the wire were arranged at a pitch of 0.5 mm; the tension of the wire was 2.6 kgf; a wire span was 415 mm; an average traveling speed of the wire was 500 m/min; and the workpiece was pressed against the wire at a force of 100 kgf.

The workpiece was rocked at an amplitude of 5 degrees relative to the center of an intermediate portion of workpiece's cut edge. The wire was made to travel synchronously with the rock of the workpiece. Also, the workpiece was moved vertically synchronously with the rock of the workpiece.

In Comparative Example 2, the conventional wire saw was used. A workpiece was fixed at a center portion between rollers and was sliced under the above-described conditions. The results are shown in Table 1.

As seen from Table 1, the cutting rate of the wire saw of Example 2 is improved to almost twice that in the case of the conventional wire saw of Comparative Example 2. No difference was observed in slicing accuracy after 1000 hours operation between Example 2 and Comparative Example 2.

### Example 3 and Comparative Example 3:

A workpiece was sliced by use of a wire saw whose workpiece-lifting apparatus is equipped with the workpiece-rocking mechanism of FIG. 16. The workpiece was a monocrystalline silicon block having a diameter of 125 mm and a length of 300 mm. Abrasive grains used were of #1000 silicon carbide. Abrasive grains were dispersed in an amount of 1 kg for 1 liter of oil. The diameter of a wire was 180 µm; rows of the wire were arranged at a pitch of 0.5 mm; the tension of the wire was 2.6 kgf; a wire span was 415 mm; an average traveling speed of the wire was 500 m/min; and the workpiece was pressed against the wire at a force of 100 kgf.

The workpiece was rocked at an amplitude of 5 degrees relative to the center of an intermediate portion of the workpiece's cut edge. The wire was made to travel synchronously with the rock of the workpiece. Also, the workpiece was moved vertically synchronously with the rock of the workpiece.

In Comparative Example 3, the conventional wire saw was used. A workpiece was fixed at a center portion between rollers and was sliced under the above-described conditions. The results are shown in Table 1.

As seen from Table 1, the cutting rate of the wire saw of Example 3 is improved to almost twice that in the case of the conventional wire saw of Comparative Example 3. No difference was observed in slicing accuracy after 1000 hours operation between Example 3 and Comparative Example 3.

### Example 4 and Comparative Example 4:

A workpiece was sliced by use of a wire saw whose workpiece-lifting apparatus is equipped with the workpiece-rocking mechanism of FIG. 19. The workpiece was a monocrystalline silicon block having a diameter of 125 mm and a length of 300 mm. Abrasive grains used were of #1000 silicon carbide. Abrasive grains were dispersed in an amount of 1 kg for 1 liter of oil. The diameter of a wire was 180 µm; rows of the wire were arranged at a pitch of 0.5 mm; the tension of the wire was 2.6 kgf; a wire span was 415 mm; an average traveling speed of the wire was 500 m/min; and the workpiece was pressed against the wire at a force of 100 kgf.

The workpiece was rocked at an amplitude of 5 degrees relative to the center of an intermediate portion of the workpiece's cut edge. The wire was made to travel synchronously with the rock of the workpiece. Also, the workpiece was moved vertically synchronously with the rock of the workpiece.

In Comparative Example 4, the conventional wire saw was used. A workpiece was fixed at a center portion between rollers and was sliced under the above-described conditions. The results are shown in Table 1.

As seen from Table 1, the cutting rate of the wire saw of Example 4 is improved to almost twice that in the case of the conventional wire saw of Comparative Example 4. No difference was observed in slicing accuracy after 1000 hours operation between Example 4 and Comparative Example 4.

**Table 1**

| | Motion of workpiece during slicing | Cutting Rate (mm/min) |
|---|---|---|
| Example 1 | Workpiece is reciprocated. | 1.36 |
| Comparative Example 1 | Workpiece is not reciprocated. | 0.71 |
| Example 2 | Workpiece is rocked (link mechanism). | 1.29 |
| Comparative Example 2 | Workpiece is not rocked. | 0.72 |
| Example 3 | Workpiece is rocked (mechanism with a plurality of arms). | 1.39 |
| Comparative Example 3 | Workpiece is not rocked. | 0.72 |
| Example 4 | Workpiece is rocked (arm mechanism of one end support type) | 1.30 |
| Comparative Example 4 | Workpiece is not rocked. | 0.70 |

The present invention is not limited to the above-described embodiments. The above-described embodiments are mere examples, and those having the substantially same structure as that described in the appended claims and providing the similar action and effects are included in the scope of the present invention.

For example, the method and the mechanism for reciprocating or rocking the workpiece are not limited to the above-described embodiments so long as the workpiece is moved to change the state of contact between the wire and the workpiece to thereby improve the cutting rate.

Also, the method and the mechanism for synchronizing the reciprocating motion of the workpiece and the travel of the wire, for synchronizing the reciprocating motion of the workpiece and the vertical motion of the workpiece, for synchronizing the rock of the workpiece and the travel of the wire, or for synchronizing the rock of the workpiece and the vertical motion of the workpiece, are not limited to the above-described embodiments so long as the workpiece is efficiently sliced through the adjustment of the motions to be synchronized.

As described above, according to the present invention, through the structural improvement of the wire saw as well as the improvement of the method for slicing the workpiece, the amount of abrasive grains caught between the wire and the workpiece is increased to thereby increase the slicing rate for the workpiece.

## Claims

1. A wire saw characterized by comprising means for reciprocating a workpiece in a direction parallel to a wire.

2. A wire saw according to Claim 1, characterized by further comprising means for synchronizing the reciprocating motion of the workpiece and the travel of the wire.

3. A wire saw according to Claim 1 or 2, characterized by further comprising means for synchronizing the reciprocating motion of the workpiece and the vertical motion of the workpiece.

4. A wire saw characterized by comprising:
a workpiece-rocking mechanism for rocking a workpiece in a plane including the traveling direction of a wire; and
means for synchronizing the motion of the workpiece-rocking mechanism and the travel of the wire.

5. A wire saw characterized by comprising:
a workpiece-rocking mechanism for rocking a workpiece in a plane including the traveling direction of a wire; and
means for synchronizing the motion of the workpiece-rocking mechanism and the vertical motion of the workpiece.

6. A wire saw characterized by comprising:
a workpiece-rocking mechanism for rocking a workpiece in a plane including the traveling direction of a wire; and
means for synchronizing the motion of the workpiece-rocking mechanism, the travel of the wire, and the vertical motion of the workpiece.

7. A wire saw according to any of Claims 4 to 6, characterized in that said workpiece-rocking mechanism comprises a workpiece table for holding the workpiece and a link mechanism for supporting the workpiece table.

8. A wire saw according to any of Claims 4 to 6, characterized in that said workpiece-rocking mechanism comprises a workpiece table for holding the workpiece and a plurality of expansion arms for supporting the worktable.

9. A wire saw according to any of Claims 4 to 6, characterized in that said workpiece-rocking mechanism comprises a workpiece table, one side of which is rotatably attached to a support member and the opposite side of which is connected to the support member via an expansion arm.

10. A method for slicing a workpiece through use of a wire saw, characterized by comprising the step of slicing the workpiece while reciprocating the workpiece in a direction parallel to a wire.

11. A method for slicing a workpiece through use of a wire saw according to Claim 10, characterized in that the workpiece is sliced while the reciprocating motion of the workpiece and the travel of the wire are synchronized.

12. A method for slicing a workpiece through use of a wire saw according to Claim 10 or 11, characterized in that the workpiece is sliced while the reciprocating motion of the workpiece and the vertical motion of the workpiece are synchronized.

13. A method for slicing a workpiece through use of a wire saw, characterized by comprising the steps of:
rocking a workpiece in a plane including the traveling direction of a wire; and
synchronizing the rock of the workpiece and the travel of the wire.

14. A method for slicing a workpiece through use of a wire saw, characterized by comprising the steps of:
rocking a workpiece in a plane including the traveling direction of a wire; and
synchronizing the rock of the workpiece and the vertical motion of the workpiece.

15. A method for slicing a workpiece through use of a wire saw, characterized by comprising the steps of:
rocking a workpiece in a plane including the traveling direction of a wire; and
synchronizing the rock of the workpiece, the travel of the wire, and the vertical motion of the workpiece.
